# EUROPEAN PATENT APPLICATION

(11) **EP 1 494 477 A1**
(43) Date of publication of application: **05.01.2005**
(21) Application number: 03101966.4
(22) Date of filing: 01.07.2003
(51) Int. Cl.: H04N 7/14, G02B 3/00, G02B 5/04

(54) **Videophone comprising a combined display and detector**

(71) Applicant: Thomson Licensing S.A., 92100 Boulogne Billancourt (FR)
(72) Inventor: Chikazawa, Yoshiharu, 221, Yokohama (JP)
(74) Representative: Ruellan-Lemonnier, Brigitte

(57) **Abstract**

The invention relates to a combined displaying and detecting device comprising elementary areas wherein each elementary area has a displaying part and a detecting part (16₁, 16₂), wherein to each elementary detecting area is associated a lens (18₁, 18₂, etc.) installed at a distance from this detecting area which is practically equal to its focal length, means being provided in order that such lens detects practically only light rays coming from a given direction.

Preferably, to each lens is associated light deviating means such as a prism (22₁, 22₂) in order to deviate light rays from said given direction to the optical axis of the lens.

The invention is particularly useful for a videophone.

## Description

The invention relates to a videophone, more particularly to a videophone of the mobile type.

Certain mobile telephones are operating like videophones i.e. they are provided with means for receiving images, more particularly images from an interlocutor, a camera for detecting images, more particularly the image of the user of this videophone, and means to transmit these images captured by the camera to the interlocutor.

In order to simulate a real conversation between both interlocutors, it has already been proposed to provide a combined display and photodetector assembly wherein a detecting and displaying surface is separated into elementary areas, each including an elementary detecting area and an elementary display area. In this way, the user looks into the display and, at the same time, the face of the user is detected by sensors on the elementary detecting areas. As the user is looking at the display representing the interlocutor and, simultaneously, the face of the user is detected in the same direction, the interlocutor, to whom is transmitted the detected image, sees the user as if he (or she) was looking at him (or her). Therefore, this avoids the unpleasant impression, which is common, when the interlocutor is not looking into the direction of the other interlocutor.

In this proposed embodiment, for instance described in the international application WO 02/43371, each elementary detecting area comprises a microlens. Its goal is to focus the image of the face of the user (or any other image) on the elementary detecting areas.

The invention starts from the recognition that the microlens is difficult to manufacture, more particularly because, in the present case, its focal length must be relatively small, this lens being close to the photodetectors.

Therefore, the detection and display device according to the invention comprises, for each elementary detecting area, a microlens situated at a distance of the detector which is practically equal to the focal length of this lens, the dimensions and position of this lens being such that it detects practically only light rays coming from one given direction.

With the invention, a lens of small focal length is no more necessary. It is sufficient to use for each elementary area a simple lens, for instance of the type of the fly-eye lens. Moreover, as each lens is provided for one direction and as the corresponding photodetector is in the focus plane of the lens, it is generally not necessary to move the lens for focusing. Moreover, the image which is detected by the photodetectors has the same direction as the object, contrary to the usual embodiments wherein the image has the reverse direction of the corresponding object.

If the dimensions of the object to be detected by the photodetectors, more particularly the dimensions of the face of the user, are greater than the dimensions of the detection area, some light rays impinging on the detecting area are not perpendicular to the detecting surface. In that case, in order that each lens detects actually only light rays coming from one direction, to each lens is associated a light deviating element, such as a prism, which receives the light rays in the given direction and which provides to the corresponding lens a light ray perpendicular to the detecting surface.

In an embodiment, the lenses are integral with a single sheet.

When deviating elements are associated to the lenses, the deviating elements are all also preferably integral with the same sheet. In that case, the lenses and the prism may be realized in the same sheet.

In an embodiment, each lens is bordered by walls forming a separation between the lens and the photodetecting area. These separating walls constitute a screen for rays having a direction which is different from the one for which the lens is devoted. Moreover, these separating walls constitute supports which allow to choose an important focal length for the lenses. It is reminded here that lenses with a long focal length are easier to manufacture than lenses with a short focal length.

In an embodiment, a portion of the walls is provided on the surface, around each elementary photodetector, another portion of the walls is also provided around each lens and, when light deviating in case of prism, walls may be also provided for each elementary prism.

Although no focusing mechanism is necessary with the invention, it may be useful, nevertheless, to control the position of the lenses with respect to the position of the detecting surface, for maximising the intensity of light on each detector. This control of the position of the lenses with respect to the detectors has the same function as the control of the aperture of the lenses.

It is also possible to provide a control mechanism to control the position of the light deviating elements with respect to the photodetection surface.

So, in brief, the invention relates to a combined displaying and detecting device comprising elementary areas wherein each elementary area has a displaying part and a detecting part, wherein to each elementary detecting area is associated a lens installed at a distance from this detecting area which is practically equal to its focal length, means being provided in order that such lens detects practically only light rays coming from a given direction.

In an embodiment, to each lens is associated light deviating means such as a prism in order to deviate light rays from said given direction to the optical axis of the lens.

These light deviating means may be integral with a transparent sheet or fixed to a given transparent sheet. The lenses and the light deviating means may also be all integral with a transparent sheet or fixed to a transparent sheet.

The lenses may be integral with a sheet or fixed to a given transparent sheet.

According to an embodiment, walls or ribs are associated to the lenses in order to separate these lenses from the detecting surface.

Walls or ribs may be associated to the light deviating means and to the lenses in order to form a screen for adjacent couples of lenses and light deviating means.

In an embodiment, the device comprises means for adjusting the distance of the transparent lens sheet with respect to the photodetection surface.

According to an embodiment, a transparent sheet supporting the light deviation means is separated from a transparent sheet supporting the lenses and the device comprises means to adjust the distance of the transparent sheet supporting the light deviating means with respect to the detection area and means to adjust the distance of the transparent sheet supporting the lenses with respect to the detecting area.

The invention relates also to the application of the device as defined above to a videophone, more particularly a mobile telephone, wherein the display is for displaying images received by the videophone and the detecting surface is for detecting images to be transmitted to another videophone.

Other features and advantages of the invention will appear with the description of certain of its embodiments, this description being made in connection with the drawings wherein:
figure 1 shows the principle of a displaying and detecting surface,
figure 2 represents one embodiment of the invention for the detecting part of a detecting and displaying device,
figure 3 corresponds to figure 2 but for another embodiment,
figure 4 represents a part of a sheet used for the embodiment of figure 2 or 3,
figure 5 represents a sheet for a variant of the figure 4 or 3,
figure 6 is another embodiment corresponding to the embodiment shown on figure 3,
figure 7 is a schematic drawing showing a mechanism for controlling the position of a lens sheet with respect to the photodetecting surface, and
figure 8 is a view similar to figure 7 wherein, in addition to the position of the lens, the position of a prism, as shown on figure 3, with respect to the photodetection surfaces is controlled.

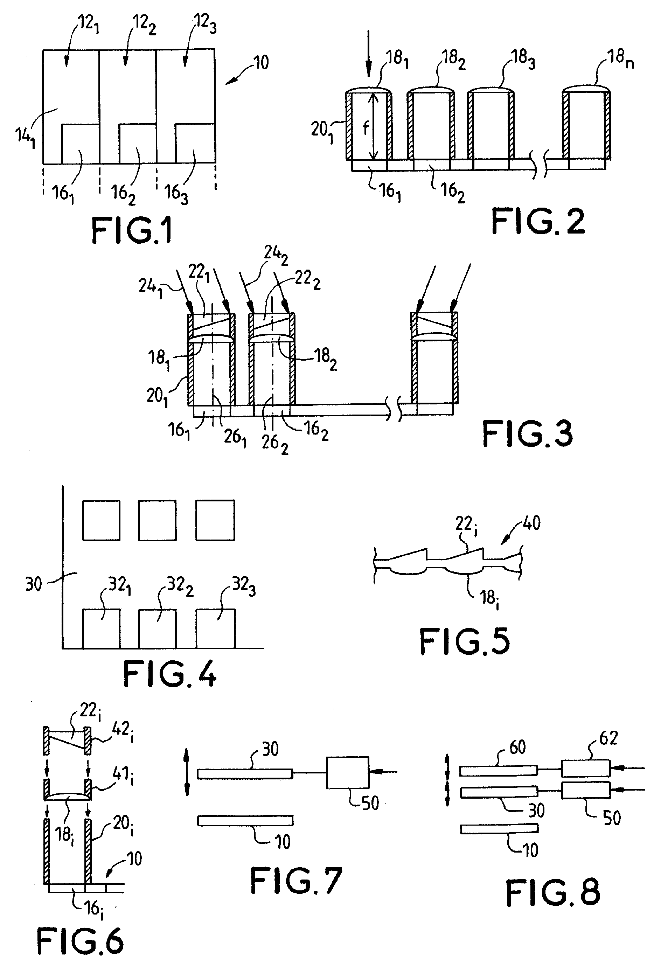

As shown on figure 1, and as already known, a combined displaying and photodetecting surface is provided. This combined device has elementary areas 12₁, 12₂, 12₃, each comprising a displaying part 14₁ and a detecting part 16₁. In this embodiment, the displaying part has a greater area than the detecting part.

The invention relates to the imaging on the detecting areas.

According to the embodiment shown on figure 2, to each elementary detecting area 16₁, 16₂, ..., 16ₙ is associated a lens 18₁, 18₂, ..., 18ₙ. All these lenses have the same focal length f and they are installed at a distance f of the corresponding photodetector. Therefore, the lenses 18ᵢ are all situated in the same plane and they may be identical.

In order to separate the lenses 18ᵢ from the plane of the detectors, walls or ribs are provided. The role of these ribs is also to form screens avoiding that rays which are not perpendicular to the surface 10 impinge on the photodetectors.

In this embodiment, the object has practically the same dimensions than the detecting surface.

Each point of this object corresponds to a given point on the detecting surface. In other words, each photodetector 16₁ detects light coming from a given point in a given direction of the object, here for instance the face of the user. As mentioned above, the image provided is a direct image and it is not necessary to modify the distance between the lenses 18₁, 18₂, ..., 18ₙ and the detecting surface 10 because parallel rays focus at the focal point of each lens, i.e. on the corresponding photodetector 16ᵢ.

The embodiment represented on figure 3 corresponds to the detection of objects having larger dimensions than the detecting surface. To each lens 18₁, 18₂, etc. is associated a prism 22₁, 22₂, etc. Each prism 22ᵢ is such that light rays having a given direction are deviated towards the direction of the optical axis of the corresponding lens 18ᵢ, i.e. perpendicular to the detecting surface 10. As shown on figure 3, the prism 22₁ deviates light rays having a direction 24₁ forming an angle α₁ with the optical axis 26₁ of the lens 16₁ and the prism 22₂ deviates the light rays having a direction 24₂ forming an angle α₂ with the optical axis 26₂ of lens 16₂ and α₂ < α₁.

Therefore, as the embodiment shown on figure 2, each lens 16ᵢ, which is at a distance f of the detecting surface 10, focuses the image of the given point of the object on the corresponding detector 16ᵢ.

It will be appreciated that the invention is well suited to objects having all about the same dimensions as it is the case with the faces of the users.

As in the embodiment of figure 2, walls 20ᵢ are provided to separate lenses from the detecting areas and for separating lenses from each other. In that case, the walls extend also to the prisms 22ᵢ.

The lenses, possibly with the prisms, are all formed in a given sheet or plate or are fixed to a plate, as shown on figure 4. On this drawing, optical elements 32₁, 32₂, etc. are with a flat and transparent sheet 30 having practically the same dimensions as the displaying and detecting surface 10. The positions of the optical elements correspond to the positions of the detecting elements. Each of these optical elements 32₁, 32₂, etc comprises a lens (like in figure 2) and a prism (like in figure 3).

Lenses and/or prisms can be integral with the sheet. For instance, in the embodiment shown on figure 5, lenses 16ᵢ and prisms 22ᵢ are integral with the same sheet 40.

In the embodiment shown on figure 6, the rib(s) or wall(s) 20ᵢ for separating each elementary photodetector 16ᵢ from the corresponding lens 18ᵢ is (are) fixed to the surface 10 and the lens 18ᵢ is surrounded by another wall or rib 41ᵢ. In the same way, the prism 22ᵢ is also surrounded by wall(s) or rib(s) 42ᵢ.

In the embodiment shown on figure 7, an adjusting mechanism 50 is provided in order to control the position of the surface 30 with respect to the surface 10. This embodiment corresponds to the case where only lenses are provided. The control signal provided to mechanism 50 is such that it adjusts the distance f between the lens sheet 30 and the surface 10 in such a way that the maximum intensity is obtained on the photodetectors.

Figure 8 represents another embodiment wherein a sheet 60 is provided for the prism and is separated from the lens sheet 30. In that case, in addition to the control mechanism 50 for the lens sheet 30, a control mechanism 62 is provided for adjusting the distance of the prism sheet 60 with respect to the surface 10. In this way, it may be possible to minimize certain optical aberrations and/or to improve the quality of the image.

The displacement of the sheet 30 and/or 60 may be realized with a piezo or ultrasonic actuator.

## Claims

1. A combined displaying and detecting device comprising elementary areas wherein each elementary area has a displaying part (12ᵢ) and a detecting part (16ᵢ), wherein to each elementary detecting area is associated a lens (18ᵢ) installed at a distance from this detecting area which is practically equal to its focal length, means being provided in order that such lens detects practically only light rays coming from a given direction.

2. A device according to claim 1 wherein to each lens is associated light deviating mean such as a prism (22ᵢ) in order to deviate light rays from said given direction to the optical axis of the lens.

3. A device according to claim 1 wherein the lenses are integral with a sheet or fixed to a given transparent sheet.

4. A device according to claim 2 wherein the light deviating means are integral with a transparent sheet or fixed to a given transparent sheet.

5. A device according to claim 2 wherein the lenses and the light deviating means are all integral with a transparent sheet or fixed to a transparent sheet.

6. A device according to any of the previous claims wherein walls or ribs are associated to the lenses in order to separate these lenses from the detecting surface.

7. A device according to claim 2 wherein walls or ribs are associated to the light deviating means and to the lenses in order to form a screen for adjacent couples of lenses and light deviating means.

8. A device according to claim 3, 4 or 5 comprising means for adjusting the distance of the transparent lens sheet with respect to the photodetection surface.

9. A device according to claims 3 and 4 wherein the transparent sheet supporting the light deviation means is separated from the transparent sheet supporting the lenses and comprising means to adjust the distance of the transparent sheet supporting the light deviating means with respect to the detection area and means to adjust the distance of the transparent sheet supporting the lenses with respect to the detecting area.

10. Application of the device according to any of the previous claims to a videophone, more particularly a mobile telephone, wherein the display is for displaying images received by the videophone and the detecting surface is for detecting images to be transmitted to another videophone.
